# EUROPÄISCHE PATENTSCHRIFT

(11) **EP 4 396 064 B1**
(45) Veröffentlichungstag und Bekanntmachung des Hinweises auf die Patenterteilung: **14.01.2026**
(21) Anmeldenummer: 22747710.6
(22) Anmeldetag: 19.07.2022
(51) Int. Cl.: B62D 15/02, B60T 7/12, B60W 20/50, B60W 50/029

(54) **VERFAHREN ZUM AUTOMATISIERTEN FAHREN EINES KRAFTFAHRZEUGS UND AUTOMATISIERT FAHRENDES KRAFTFAHRZEUG**
METHOD FOR THE AUTOMATED DRIVING OF A MOTOR VEHICLE, AND AUTOMATED MOTOR VEHICLE
PROCÉDÉ DE CONDUITE AUTOMATISÉE D'UN VÉHICULE AUTOMOBILE ET VÉHICULE AUTOMOBILE AUTOMATISÉ

(30) Priorität: 02.09.2021 DE 102021209674
(43) Veröffentlichungstag der Anmeldung: 10.07.2024
(73) Patentinhaber: VOLKSWAGEN AKTIENGESELLSCHAFT, 38440 Wolfsburg (DE)
(72) Erfinder: DOBBERPHUL, Timo, 38102 Braunschweig (DE); THISSEN, Sarah Alexa, 38102 Braunschweig (DE); LÜDDECKE, Jens, 38176 Wendeburg (DE)
(86) Internationale Anmeldenummer: PCT/EP2022/070272
(87) Internationale Veröffentlichungsnummer: WO 2023/030745

(56) Entgegenhaltungen:
- DE-A1- 102013 213 171
- DE-A1- 102015 003 124
- DE-A1- 102017 011 808
- DE-A1- 102019 102 830
- US-A1- 2021 206 388

## Beschreibung

Die Erfindung betrifft ein Verfahren zum automatisierten Fahren eines Kraftfahrzeugs und ein automatisiert fahrendes Kraftfahrzeug.

Beim automatisierten Fahren auf einem SAE Level 4 ist der Fahrer als Rückfallebene im Fahrzeug nicht vorhanden, d.h. das Gesamtsystem muss so fehlertolerant ausgelegt sein, dass das Fahrzeug immer gefährdungsfrei bewegt wird bzw. in einen sicheren Zustand überführt werden kann (z.B. anhalten auf dem Seitenstreifen). Abhängig von der maximalen Geschwindigkeit ergibt sich dadurch also eine minimale Zeit/Strecke nach dem Auftreten eines Fehlers, in der das Gesamtsystem weiterhin funktionsfähig sein muss (fail operational).

Ein möglicher Ansatz besteht in der redundanten Datenübertragung unter Ausschluss von Common Causes, d.h. zwei parallele Sender, Kommunikationsbusse und Empfänger, deren Übertragung nicht durch dieselbe Fehlerursache unterbrochen werden kann. Als Common Causes können EMV, Temperatur, Wasser, mechanische Beschädigungen oder systematische Hardware-Fehler angenommen werden, was dazu führt, dass man die parallelen Busse räumlich getrennt, auf unterschiedlichen Höhen, durch unterschiedliche Medien nach unterschiedlichen Übertragungsprinzipien und unterschiedlichen Technologien implementieren muss. Dieser Ansatz ist sehr aufwendig und komplex.

Aus der US 2019/0168805 A1 ist ein automatisiert fahrendes Kraftfahrzeug bekannt. Dabei ist vorgesehen, dass eine zentrale Steuereinheit aktuelle Lenksteuerbefehle und zukünftige Lenksteuerbefehle an ein Lenkungssteuergerät übermittelt, wobei im Fehlerfall ein oder mehrere zukünftige Lenksteuerbefehle ausgeführt werden.

Aus der DE 10 2019 102 830 A1, der DE 10 2017 011 808 A1, der DE 10 2015 003 124 A1 sowie der DE 10 2013 213 171 A1 sind jeweils gattungsgemäße Verfahren zum automatisierten Fahren eines Kraftfahrzeugs bekannt. Ein weiteres Verfahren zur Verfügungstellung einer Notfalltrajektorie für ein autonom fahrendes Fahrzeug ist aus der US 2021/0206388 A1 bekannt.

Der Erfindung liegt das technische Problem zugrunde, ein Verfahren zum automatisierten Fahren eines Kraftfahrzeugs zur Verfügung zu stellen, um bei geringer Komplexität das Kraftfahrzeug sicher zu betreiben. Ein weiteres technisches Problem ist die Schaffung eines geeigneten automatisiert fahrenden Kraftfahrzeugs.

Die Lösung des technischen Problems ergibt sich durch ein Verfahren mit den Merkmalen des Anspruchs 1 sowie ein automatisiert fahrendes Kraftfahrzeug mit den Merkmalen des Anspruchs 8. Weitere vorteilhafte Ausgestaltungen der Erfindung ergeben sich aus den Unteransprüchen.

Das Verfahren zum automatisierten Fahren eines Kraftfahrzeugs erfolgt mittels mindestens eines Steuergeräts zum Berechnen einer Trajektorie, wobei für die Trajektorie Steuerbefehle für Aktoren zur Einstellung einer Längs- und Querführung des Kraftfahrzeugs berechnet werden und von den Aktoren umgesetzt werden. Die Aktoren sind beispielsweise eine Antriebsaktorik, eine Bremsaktorik und eine Lenkaktorik. Die Steuerbefehle werden zu festgelegten Zeitpunkten aktualisiert. Beispielsweise erhält ein Lenkungssteuergerät alle 10 ms einen aktualisierten Lenksteuerbefehl. Weiter wird zu jedem Zeitpunkt eine aktuelle Notfalltrajektorie berechnet, um das Kraftfahrzeug in einen Fahrzeugstillstand zu überführen, wobei für die Notfalltrajektorie ein Satz von Steuerbefehlen für Aktoren zur Einstellung mindestens der Querführung berechnet wird, die bei Ausfall der Steuerbefehle für die Trajektorie automatisch für die Notfalltrajektorie von den Aktoren umgesetzt werden. Somit kann bei Ausfall der Datenkommunikation stets das Kraftfahrzeug sicher zum Stillstand gebracht werden. Der Satz von Steuerbefehlen für die Notfalltrajektorie wird dabei stets parallel mit den Steuerbefehlen für die Trajektorie übertragen, sodass stets eine aktuelle Notfalltrajektorie abgefahren werden kann.

Dabei sind wenigstens den Aktoren für die Lenkung und die Bremse jeweils zwei Steuergeräte zugeordnet, wobei sich die beiden Steuergeräte gegenseitig überwachen, wobei jeweils nur ein Steuergerät Steuerbefehle an den zugeordneten Aktor übermittelt. Dabei können die beiden Steuergeräte als Master und Slave arbeiten. Dabei weist mindestens ein Lenkungssteuergerät einen Speicher für den Satz von Steuerbefehlen für die Notfalltrajektorie auf.

Dabei kann vorgesehen sein, dass der Satz von Steuerbefehlen für die Notfalltrajektorie nur Lenksteuerbefehle enthält. In diesem Fall werden in einem Steuergerät für die Bremskraft feste vorgegebene Steuerbefehle im Notfall abgearbeitet, wobei beispielsweise eine konstante Verzögerung eingestellt wird. Diese konstante Verzögerung muss dabei nicht die maximal mögliche Verzögerung sein. Vielmehr kann eine feste Komfort-Verzögerung gewählt werden (z.B. 3,9 m/s²). Diese wird dann auch bei der Berechnung der Notfalltrajektorie zugrunde gelegt. Bei einer angenommenen maximalen Fahrzeuggeschwindigkeit von 70 km/h kommt dann das Kraftfahrzeug nach 50 m bzw. nach 5 s zum Stillstand. Der Vorteil ist, dass die Anzahl der zu übertragenen Steuerbefehle reduziert ist, was die Datenübertragung vereinfacht. Es ist aber möglich, Steuerbefehle für die Bremsaktorik oder gar die Antriebsaktorik zu berechnen und in dem Satz von Steuerbefehlen zu übertragen.

In einer Ausführungsform ist der Satz von Steuerbefehlen eine feste vorgegebene Anzahl von Steuerbefehlen und/oder den Steuerbefehlen im Satz von Steuerbefehlen ist ein fest vorgegebener Zeitpunkt zugeordnet.

Dies soll kurz anhand eines Zahlenbeispiels erläutert werden. Wie zuvor ausgeführt, kommt ei Kraftfahrzeug bei 70 km/h und einer Verzögerung von 3,9 m/s² nach 50 m bzw. 5 s zum Stillstand. Möchte man nun alle 0,5 s einen Lenksteuerbefehl anpassen, so benötigt man 10 Steuerbefehle für die gesamte Notfalltrajektorie. Fährt das Kraftfahrzeug aber mit einer geringen Geschwindigkeit, so kommt es früher zum Stillstand. Hier gibt es jetzt die Möglichkeit, die Notfalltrajektorie feinstufiger zu planen und die 10 Steuerbefehle auf z.B. 4 s aufzuteilen. Es ist aber auch möglich, die Zeitpunkte (z.B. 0,5 s) beizubehalten. Soll dann auch die Anzahl konstant bleiben, so werden als letzte Steuerbefehle Nullen übertragen (da das Kraftfahrzeug schon steht). Man kann aber auch die Zeitpunkte konstant halten (z.B. alle 0,5 s) und nur die notwendigen Steuerbefehle übertragen (z.B. 8 statt 10).

In einer weiteren Ausführungsform werden die Steuerbefehle für die Trajektorie und der Satz von Steuerbefehlen für die Notfalltrajektorie über separate Bussysteme übertragen. Neben der Ausfallsicherheit kann so auch die Buslast besser aufgeteilt werden.

In einer weiteren Ausführungsform werden die Steuerbefehle für die Trajektorie in einem ersten Steuergerät und der Satz von Steuerbefehlen für die Notfalltrajektorie in einem zweiten Steuergerät berechnet. Hierdurch kann die Rechenlast besser verteilt werden. Dabei können sich erstes und zweites Steuergerät auch gegenseitig überwachen.

In einer alternativen Ausführungsform werden hingegen die Steuerbefehle für die Trajektorie und der Satz von Steuerbefehlen für die Notfalltrajektorie in einem gemeinsamen Steuergerät berechnet, was ein Steuergerät einspart.

Dabei kann in einer Ausführungsform vorgesehen sein, dass jeweils ein Steuergerät nur die Steuerbefehle für die Trajektorie an den Aktor überträgt und das andere Steuergerät nur die Steuerbefehle für die Notfalltrajektorie.

Das automatisiert fahrende Kraftfahrzeug umfasst mindestens ein Steuergerät zum Berechnen einer Trajektorie, wobei das mindestens eine Steuergerät oder ein weiteres Steuergerät derart ausgebildet ist, für die Trajektorie Steuerbefehle für Aktoren zur Einstellung einer Längs- und Querführung des Kraftfahrzeugs zu berechnen, die von den Aktoren umgesetzt werden. Dabei werden die Steuerbefehle zu festgelegten Zeitpunkten aktualisiert. Weiter ist mindestens ein Steuergerät derart ausgebildet, zu jedem festgelegten Zeitpunkt eine aktuelle Notfalltrajektorie zu berechnen, um das Fahrzeug in einen Fahrzeugstillstand zu überführen, wobei für die Notfalltrajektorie ein Satz von Steuerbefehlen für Aktoren zur Einstellung mindestens der Querführung berechnet wird, die bei Ausfall der Steuerbefehle für die Trajektorie automatisch von den Aktoren umgesetzt werden.

Hinsichtlich der weiteren Ausgestaltung wird vollinhaltlich auf die verfahrensmäßigen Ausführungen Bezug genommen.

Die Erfindung wird nachfolgend anhand bevorzugter Ausführungsbeispiele näher erläutert. Die Figuren zeigen:
- Fig. 1: eine schematische Schaltungsanordnung einer ersten Ausführungsform und
- Fig. 2: eine schematische Schaltungsanordnung einer zweiten Ausführungsform.

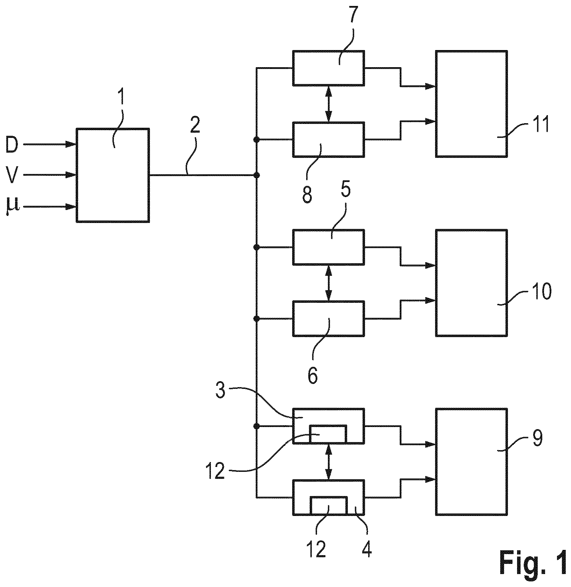

In der Fig. 1 ist eine Schaltungsanordnung eines automatisiert fahrenden Kraftfahrzeugs dargestellt. Die Schaltungsanordnung umfasst ein erstes zentrales Steuergerät 1. Das zentrale Steuergerät 1 ist über ein Bussystem 2 mit verschiedenen Steuergeräten verbunden, die verschiedene Aktoren zur Einstellung einer Längs- und Querdynamik des Kraftfahrzeugs umfassen. Dabei weisen die Steuergeräte zwei Lenkungssteuergeräte 3, 4, zwei Bremssteuergeräte 5, 6 und zwei Antriebssteuergeräte 7, 8 auf. Die beiden Lenkungssteuergeräte 3, 4 steuern eine Lenkaktorik 9 an. Die beiden Bremssteuergeräte 5, 6 steuern eine Bremsaktorik 10 und die beiden Antriebssteuergeräte 7, 8 steuern eine Antriebsaktorik 11 an. Dabei sei angemerkt, dass auch ein Antriebssteuergerät 7, 8 entfallen kann. Dabei ist weiter dargestellt, dass die jeweils beiden Steuergeräte für eine Aktorik miteinander verbunden sind, um sich so gegenseitig zu überwachen. Weiter weist mindestens eines der Lenkungssteuergeräte 3, 4 einen Speicher 12 für einen Satz von Steuerbefehlen für eine Notfalltrajektorie auf.

Das zentrale Steuergerät 1 erhält Daten D einer nicht dargestellten Umfeldsensorik, eine Fahrzeuggeschwindigkeit V und gegebenenfalls einen Reibwert µ einer Straßenoberfläche. Zusätzlich können dem Steuergerät 1 noch Daten von einer Verkehrsinfrastruktur oder von anderen Verkehrsteilnehmern zugeführt werden. Aus all den Daten berechnet das Steuergerät 1 eine Trajektorie, die das Kraftfahrzeug abfahren soll. Weiter ermittelt dann das Steuergerät 1 Steuerbefehle für die Aktoren 9-11, damit diese die Längs- und Querdynamik so einstellen, dass die berechnete Trajektorie abgefahren wird. Diese Steuerbefehle werden über das Bussystem 2 an die Steuergeräte der Aktoren übertragen. Dabei werden die Steuerbefehle zu festgelegten Zeitpunkten (z.B. alle 10 ms) übertragen. Parallel berechnet das Steuergerät 1 eine Notfalltrajektorie, um von der aktuellen Position sicher in einen Fahrzeugstillstand zu kommen. Für diese Notfalltrajektorie wird ein Satz von Steuerbefehlen mindestens für die Lenkaktorik 9 berechnet. Dieser Satz von Steuerbefehlen wird ebenfalls über das Bussystem 2 übertragen. Die Steuergeräte empfangen die Steuerbefehle und jeweils mindestens ein Steuergerät steuert seine zugeordnete Aktorik mit dem übermittelten Steuerbefehl an. Mindestens ein Lenkungssteuergerät 3, 4 speichert darüber hinaus die Steuerbefehle des Satzes für die Notfalltrajektorie ab. Im Normalbetrieb kommt dann zum nächsten festgelegten Zeitpunkt ein neuer Satz von Steuerbefehlen für eine Notfalltrajektorie und die alten Daten werden überschrieben. Kommt es dann aufgrund irgendeines Fehlers dazu, dass kein Lenkungssteuergerät 3, 4 aktuelle Steuerbefehle für die Trajektorie erhält, so werden durch ein Lenkungssteuergerät 3, 4 die Steuerbefehle der Notfalltrajektorie abgearbeitet, die zuletzt empfangen wurden. Dabei kann vorgesehen sein, dass nur eines der beiden Lenkungssteuergeräte 3, 4 die Steuerbefehle der Notfalltrajektorie an die Lenkaktorik 9 übermitteln kann. Es sind aber auch Ausführungen möglich, wobei beide Lenkungssteuergeräte 3, 4 den Satz von Steuerbefehlen abspeichern und im Notfall abarbeiten können.

In mindestens einen Bremssteuergerät sind Bremssteuerbefehle für die Notfalltrajektorie fest abgelegt, beispielsweise das Kraftfahrzeug mit einer konstanten Verzögerung abzubremsen. Dabei stehen die Bremssteuergeräte 5, 6 und die Lenkungssteuergeräte 3, 4 im Austausch, wobei die zugehörige Datenverbindung aus Übersichtsgründen nicht dargestellt ist. Dabei tauschen sich die Steuergeräte aus, ob diese aktuelle Steuerbefehle für die Trajektorie erhalten haben. Haben beispielsweise beide Bremssteuergeräte keine Steuerbefehle erhalten oder beide Lenkungssteuergeräte, so muss die Notfalltrajektorie abgefahren werden, indem ein Lenkungssteuergerät 3, 4 den letzten Satz von Steuerbefehlen für die Notfalltrajektorie an die Lenkaktorik 9 übermittelt und mindestens ein Bremssteuergerät die konstante Verzögerung an die Bremsaktorik 10 übermittelt. Weiter wird vorzugsweise mindestens ein Antriebssteuergerät 7, 8 über das Abfahren der Notfalltrajektorie informiert, sodass kein zusätzliches Antriebsmoment mehr erzeugt wird. Vorzugsweise arbeiten dabei die beiden Lenkungssteuergeräte 3, 4 und die beiden Bremssteuergeräte 5, 6 als Master und Slave. Dabei sei noch einmal angemerkt, dass der zeitliche Abstand zwischen zwei Steuerbefehlen der Notfalltrajektorie größer sein kann und vorzugsweise ist als der zeitliche Abstand zwischen zwei Steuerbefehlen für die Trajektorie.

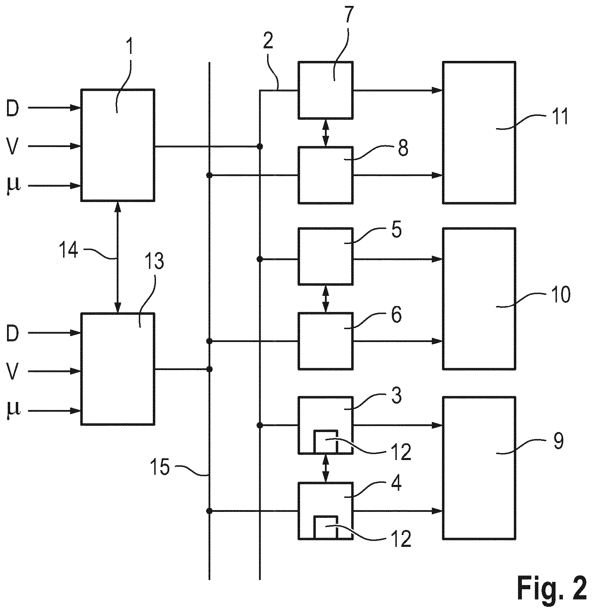

In der Fig. 2 ist eine alternative Schaltungsanordnung dargestellt. Ein erster Unterschied ist, dass neben dem zentralen Steuergerät 1 ein zweites Steuergerät 13 existiert, dass die Notfalltrajektorie und den Satz von Steuerbefehlen berechnet. Das zentrale, erste Steuergerät 1 und das zweite Steuergerät 13 können dabei als Master und Slave arbeiten. Hierzu sind die beiden Steuergeräte 1, 13 über eine Datenverbindung 14 miteinander verbunden. Weiter ist das erste Steuergerät 1 mit einem ersten Bussystem 2 und das zweite Steuergerät 13 mit einem zweiten Bussystem 15 verbunden. Dabei ist weiter dargestellt, dass jeweils nur ein Steuergerät mit einem Bussystem verbunden ist. Dies ist aber nicht zwingend. So kann auch jedes Steuergerät mit beiden Bussystemen 2, 15 verbunden sein. Weiter kann auch vorgesehen sein, dass das zentrale Steuergerät 1 und das zweite Steuergerät 13 ihre berechneten Steuerbefehle austauschen, wobei dann beide Steuergeräte 1, 13 sowohl die Steuerbefehle für die Trajektorie als auch den Satz von Steuerbefehlen für die Notfalltrajektorie über die Bussysteme 2, 15 übertragen. Die Anzahl der Steuerbefehle in einem Satz für die Notfalltrajektorie liegt vorzugsweise zwischen 5 bis 50 und weiter vorzugsweise zwischen 10 bis 20.

### Bezugszeichenliste

- 1: Steuergerät
- 2: Bussystem
- 3, 4: Lenkungssteuergerät
- 5, 6: Bremssteuergerät
- 7, 8: Antriebssteuergerät
- 9: Lenkaktorik
- 10: Bremsaktorik
- 11: Antriebsaktorik
- 12: Speicher
- 13: Steuergerät
- 14: Datenverbindung
- 15: Bussystem
- D: Daten
- V: Fahrzeuggeschwindigkeit
- µ: Reibwert

## Patentansprüche

1. Verfahren zum automatisierten Fahren eines Kraftfahrzeugs, mittels mindestens eines Steuergeräts (1) zum Berechnen einer Trajektorie, wobei für die Trajektorie Steuerbefehle für Aktoren (9-11) zur Einstellung einer Längs- und Querführung des Kraftfahrzeugs berechnet werden und von den Aktoren (9-11) umgesetzt werden, wobei die Steuerbefehle zu festgelegten Zeitpunkten aktualisiert werden, wobei zu jedem Zeitpunkt eine aktuelle Notfalltrajektorie berechnet wird, um das Kraftfahrzeug in einen Fahrzeugstillstand zu überführen, wobei für die Notfalltrajektorie ein Satz von Steuerbefehlen für Aktoren (9) zur Einstellung mindestens der Querführung berechnet wird, die bei Ausfall der Steuerbefehle für die Trajektorie automatisch für die Notfalltrajektorie von den Aktoren (9) umgesetzt werden,
**dadurch gekennzeichnet, dass**
wenigstens der Lenkaktorik (9) und der Bremsaktorik (10) jeweils zwei Steuergeräte zugeordnet sind und der Antriebsaktorik eins oder zwei Steuergeräte zugeordnet werden können, wobei sich die beiden Steuergeräte gegenseitig überwachen, wobei jeweils nur ein Steuergerät Steuerbefehle an den zugeordneten Aktor übermittelt, wobei mindestens ein Lenkungssteuergerät (3, 4) einen Speicher (12) für den Satz von Steuerbefehlen für die Notfalltrajektorie aufweist.

2. Verfahren nach Anspruch 1, **dadurch gekennzeichnet, dass** der Satz von Steuerbefehlen für die Notfalltrajektorie eine feste vorgegebene Anzahl von Steuerbefehlen ist und/oder den Steuerbefehlen im Satz von Steuerbefehlen ein fest vorgegebener Zeitpunkt zugeordnet ist.

3. Verfahren nach Anspruch 1 oder 2, **dadurch gekennzeichnet, dass** die Steuerbefehle für die Trajektorie und der Satz von Steuerbefehlen für die Notfalltrajektorie über separate Bussysteme (2, 15) übertragen werden.

4. Verfahren nach einem der vorangegangenen Ansprüche, **dadurch gekennzeichnet, dass** die Steuerbefehle für die Trajektorie in einem ersten Steuergerät (1) und der Satz von Steuerbefehlen für die Notfalltrajektorie in einem zweiten Steuergerät (13) berechnet werden.

5. Verfahren nach einem der Ansprüche 1 bis 3, **dadurch gekennzeichnet, dass** die Steuerbefehle für die Trajektorie und der Satz von Steuerbefehlen für die Notfalltrajektorie in einem gemeinsamen Steuergerät (1) berechnet werden.

6. Verfahren nach Anspruch 6, **dadurch gekennzeichnet, dass** jeweils ein Steuergerät nur die Steuerbefehle für die Trajektorie an den Aktor überträgt und das andere Steuergerät nur die Steuerbefehle für die Notfalltrajektorie.

7. Verfahren nach einem der vorangegangenen Ansprüche, **dadurch gekennzeichnet, dass** in mindestens einem Bremssteuergerät (5, 6) Bremssteuerbefehle für die Notfalltrajektorie fest abgelegt sind.

8. Automatisiert fahrendes Kraftfahrzeug, umfassend mindestens ein Steuergerät (1) zum Berechnen einer Trajektorie, wobei das mindestens eine Steuergerät (1) oder ein weiteres Steuergerät derart ausgebildet ist, für die Trajektorie Steuerbefehle für Aktoren (9-11) zur Einstellung einer Längs- und Querführung des Kraftfahrzeugs zu berechnen, die von den Aktoren (9-11) umgesetzt werden, wobei die Steuerbefehle zu festgelegten Zeitpunkten aktualisiert werden, wobei mindestens ein Steuergerät (1, 13) derart ausgebildet ist, zu jedem festgelegten Zeitpunkt eine aktuelle Notfalltrajektorie zu berechnen, um das Kraftfahrzeug in einen Fahrzeugstillstand zu überführen, wobei für die Notfalltrajektorie ein Satz von Steuerbefehlen für Aktoren (9) zur Einstellung mindestens der Querführung berechnet wird, die bei Ausfall der Steuerbefehle für die Trajektorie automatisch von den Aktoren (9) umgesetzt werden,
**dadurch gekennzeichnet, dass**
wenigstens der Lenkaktorik (9) und der Bremsaktorik (10) jeweils zwei Steuergeräte zugeordnet sind und der Antriebsaktorik eins oder zwei Steuergeräte zugeordnet werden können, wobei sich die beiden Steuergeräte gegenseitig überwachen, wobei jeweils nur ein Steuergerät Steuerbefehle an den zugeordneten Aktor übermittelt, wobei mindestens ein Lenkungssteuergerät (3, 4) einen Speicher (12) für den Satz von Steuerbefehlen für die Notfalltrajektorie aufweist.

9. Automatisiert fahrendes Kraftfahrzeug nach Anspruch 8, **dadurch gekennzeichnet, dass** der Satz von Steuerbefehlen für die Notfalltrajektorie eine feste vorgegebene Anzahl von Steuerbefehlen ist und/oder den Steuerbefehlen im Satz von Steuerbefehlen ein fest vorgegebener Zeitpunkt zugeordnet ist.

10. Automatisiert fahrendes Kraftfahrzeug nach einem der Ansprüche 8 oder 9, **dadurch gekennzeichnet, dass** das Kraftfahrzeug ein Steuergerät (1) aufweist, das derart ausgebildet ist, die Steuerbefehle für die Trajektorie und den Satz von Steuerbefehlen für die Notfalltrajektorie zu berechnen.

## Claims

1. Method for the automated driving of a motor vehicle, by means of at least one control unit (1) for calculating a trajectory, wherein for the trajectory control commands are calculated for actuators (9-11) for adjusting longitudinal and lateral guidance of the motor vehicle and are implemented by the actuators (9-11), wherein the control commands are updated at specified times, wherein at each time an up-to-date emergency trajectory is calculated to bring the motor vehicle to a vehicle standstill, wherein for the emergency trajectory a set of control commands are calculated for actuators (9) for adjusting at least the lateral guidance, which control commands are, for the emergency trajectory, automatically implemented by the actuators (9) in the event of a loss of the control commands for the trajectory,
**characterized in that**
two control units are respectively assigned at least to the steering actuator system (9) and the brake actuator system (10), and one or two control units can be assigned to the drive actuator system,
wherein the two control units monitor each other, wherein in each case only one control unit transmits control commands to the relevant assigned actuator, wherein at least one steering control unit (3, 4) has a memory (12) for the set of control commands for the emergency trajectory.

2. Method according to claim 1, **characterized in that** the set of control commands for the emergency trajectory is a fixed, predetermined number of control commands and/or a fixedly predetermined time is assigned to the control commands in the set of control commands.

3. Method according to claim 1 or 2, **characterized in that** the control commands for the trajectory and the set of control commands for the emergency trajectory are transmitted via separate bus systems (2, 15).

4. Method according to any of the preceding claims, **characterized in that** the control commands for the trajectory are calculated in a first control unit (1) and the set of control commands for the emergency trajectory are calculated in a second control unit (13).

5. Method according to any of claims 1 to 3, **characterized in that** the control commands for the trajectory and the set of control commands for the emergency trajectory are calculated in a common control unit (1).

6. Method according to claim 6, **characterized in that** one control unit transmits only the control commands for the trajectory to the actuator and the other control unit transmits only the control commands for the emergency trajectory.

7. Method according to any of the preceding claims, **characterized in that** brake control commands for the emergency trajectory are permanently stored in at least one brake control unit (5, 6).

8. Automated driving motor vehicle, comprising at least one control unit (1) for calculating a trajectory, wherein the at least one control unit (1) or a further control unit is designed to calculate, for the trajectory, control commands for actuators (9-11) for adjusting longitudinal and lateral guidance of the motor vehicle, which control commands are implemented by the actuators (9-11), wherein the control commands are updated at specified times, wherein at least one control unit (1, 13) is designed to calculate, at each specified time, an up-to-date emergency trajectory to bring the motor vehicle to a vehicle standstill, wherein for the emergency trajectory a set of control commands are calculated for actuators (9) for adjusting at least the lateral guidance, which control commands are automatically implemented by the actuators (9) in the event of a loss of the control commands for the trajectory,
**characterized in that**
two control units are respectively assigned at least to the steering actuator system (9) and the brake actuator system (10), and one or two control units can be assigned to the drive actuator system,
wherein the two control units monitor each other, wherein in each case only one control unit transmits control commands to the relevant assigned actuator, wherein at least one steering control unit (3, 4) has a memory (12) for the set of control commands for the emergency trajectory.

9. Automated driving motor vehicle according to claim 8, **characterized in that** the set of control commands for the emergency trajectory is a fixed, predetermined number of control commands and/or a fixedly predetermined time is assigned to the control commands in the set of control commands.

10. Automated driving motor vehicle according to either of claims 8 and 9, **characterized in that** the motor vehicle has a control unit (1) designed to calculate the control commands for the trajectory and the set of control commands for the emergency trajectory.

## Revendications

1. Procédé de conduite automatisée d'un véhicule automobile, par le biais d'au moins un appareil de commande (1) pour calculer une trajectoire, dans lequel des instructions de commande pour des actionneurs (9-11) pour le réglage d'un guidage longitudinal et transversal du véhicule automobile sont calculées pour la trajectoire et sont mises en œuvre par les actionneurs (9-11), dans lequel les instructions de commande sont actualisées à des instants établis, dans lequel une trajectoire d'urgence actuelle est calculée à chaque instant pour amener le véhicule automobile dans un état d'arrêt de véhicule, dans lequel un jeu d'instructions de commande pour des actionneurs (9) est calculé pour la trajectoire d'urgence pour le réglage au moins du guidage transversal, lesquelles instructions de commande sont automatiquement mises en œuvre par les actionneurs (9) pour la trajectoire d'urgence en cas de défaillance des instructions de commande pour la trajectoire,
**caractérisé en ce qu'**au moins deux appareils de commande sont respectivement associés à l'actionneur de direction (9) et à l'actionneur de frein (10) et un ou deux appareils de commande peuvent être associés à l'actionneur d'entraînement, dans lequel les deux appareils de commande se surveillent mutuellement, dans lequel
un seul appareil de commande transmet respectivement des instructions de commande à l'actionneur associé, dans lequel au moins un appareil de commande de direction (3, 4) présente une mémoire (12) pour le jeu d'instructions de commande pour la trajectoire d'urgence.

2. Procédé selon la revendication 1, **caractérisé en ce que** le jeu d'instructions de commande pour la trajectoire d'urgence est un nombre fixe prédéfini d'instructions de commande et/ou un moment fixe prédéfini est associé aux instructions de commande dans le jeu d'instructions de commande.

3. Procédé selon la revendication 1 ou 2, **caractérisé en ce que** les instructions de commande pour la trajectoire et le jeu d'instructions de commande pour la trajectoire d'urgence sont transmis par des systèmes de bus séparés (2, 15).

4. Procédé selon l'une des revendications précédentes,
**caractérisé en ce que** les instructions de commande de la trajectoire sont calculées dans un premier appareil de commande (1) et le jeu d'instructions de commande de la trajectoire d'urgence est calculé dans un second appareil de commande (13).

5. Procédé selon l'une des revendications 1 à 3, **caractérisé en ce que** les instructions de commande de la trajectoire et le jeu d'instructions de commande de la trajectoire d'urgence sont calculés dans un appareil de commande (1) commun.

6. Procédé selon la revendication 6, **caractérisé en ce que** respectivement un appareil de commande ne transmet à l'actionneur que les instructions de commande pour la trajectoire et l'autre appareil de commande ne transmet que les instructions de commande pour la trajectoire d'urgence.

7. Procédé selon l'une des revendications précédentes, **caractérisé en ce que** des instructions de commande de frein pour la trajectoire d'urgence sont enregistrées de manière fixe dans au moins un appareil de commande de frein (5, 6).

8. Véhicule automobile à conduite automatisée, comprenant au moins un appareil de commande (1) pour le calcul d'une trajectoire, dans lequel l'au moins un appareil de commande (1) ou un autre appareil de commande est conçu de manière à calculer, pour la trajectoire, des instructions de commande pour des actionneurs (9-11) pour le réglage d'un guidage longitudinal et transversal du véhicule automobile, qui sont mises en œuvre par les actionneurs (9-11), dans lequel les instructions de commande sont actualisées à des instants établis, dans lequel au moins un appareil de commande (1, 13) est conçu de manière à calculer à chaque instant établi une trajectoire d'urgence actuelle, pour amener le véhicule automobile dans un état d'arrêt de véhicule automobile, dans lequel un jeu d'instructions de commande pour des actionneurs (9) est calculé pour la trajectoire d'urgence pour le réglage au moins du guidage transversal, instructions qui sont mises en œuvre automatiquement par les actionneurs (9) en cas de défaillance des instructions de commande pour la trajectoire, **caractérisé en ce qu'**au moins deux appareils de commande sont associés respectivement à l'actionneur de direction (9) et à l'actionneur de freinage (10) et un ou deux appareils de commande peuvent être associés à l'actionneur d'entraînement, dans lequel les deux appareils de commande se surveillent mutuellement, dans lequel
un seul appareil de commande transmet respectivement des instructions de commande à l'actionneur associé, dans lequel au moins un appareil de commande de direction (3, 4) présente une mémoire (12) pour le jeu d'instructions de commande pour la trajectoire d'urgence.

9. Véhicule automobile à conduite automatisée selon la revendication 8, **caractérisé en ce que** le jeu d'instructions de commande pour la trajectoire d'urgence est un nombre fixe prédéfini d'instructions de commande et/ou un instant fixe prédéfini est associé aux instructions de commande dans le jeu d'instructions de commande.

10. Véhicule automobile à conduite automatisée selon l'une des revendications 8 ou 9, **caractérisé en ce que** le véhicule automobile présente un appareil de commande (1) qui est conçu pour calculer les instructions de commande pour la trajectoire et le jeu d'instructions de commande de la trajectoire d'urgence.
